(19) Europäisches Patentamt

European Patent Office

Office européen des brevets

(11) **EP 0 756 182 B1**

(12) **FASCICULE DE BREVET EUROPEEN**

(45) Date de publication et mention
de la délivrance du brevet:
**14.07.2004 Bulletin 2004/29**

(51) Int Cl.7: **G01V 1/36**

(21) Numéro de dépôt: **96401552.3**

(22) Date de dépôt: **11.07.1996**

(54) **Méthode de filtrage d'ondes elliptiques se propageant dans un milieu**

Verfahren zum Filtern von sich in einem Medium ausbreitenden elliptischen Wellen

Method for filtering elliptical waves propagating in a medium

(84) Etats contractants désignés:
**BE DE GB IT NL**

(30) Priorité: **26.07.1995 FR 9509197**

(43) Date de publication de la demande:
**29.01.1997 Bulletin 1997/05**

(73) Titulaire: **Institut Français du Pétrole
92500 Rueil Malmaison (FR)**

(72) Inventeur: **Becquey,Marc
92500 Rueil-Malmaison (FR)**

(56) Documents cités:
WO-A-93/25919          FR-A- 2 648 567
FR-A- 2 720 518        US-A- 4 458 341
US-A- 4 757 480        US-A- 4 890 264
US-A- 4 935 905        US-A- 5 060 202

• GEOPHYSICS, vol. 18, 1953, TULSA, USA, pages 844-870, XP002001438 I. TOLSTOY ET AL : "Dispersive properties of stratified elestic and liquid media: a ray theory"

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne une méthode de filtrage permettant de discriminer des ondes elliptiques parmi d'autres ondes se propageant dans un milieu matériel par un traitement combiné des composantes mesurées suivant plusieurs axes des ondes reçues par un récepteur multi-axes.

La méthode selon l'invention trouve des applications dans de nombreux domaines. Elle peut s'appliquer par exemple dans le cadre d'opérations de prospection géophysique et notamment sismique où l'on reçoit les ondes émanant d'une formation géologique, en réponse à des ébranlements qui lui sont appliqués, au moyen de récepteurs couplés avec la surface, tels que des géophones tri-axiaux ou "triphone".

ÉTAT DE LA TECHNIQUE

En prospection sismique notamment, on sait que les ondes dites de surface ne pénètrent pas en profondeur. Elles ne portent donc généralement pas d'information utile au géophysicien d'exploration et sont considérées comme du bruit. Leur énergie est souvent importante, comparée à celle du signal utile. Les ondes de surface doivent donc être filtrées.

A la surface d'un milieu semi-infini élastique et homogène, se développent deux types d'ondes de surface, les ondes de Rayleigh pour lesquelles le mouvement des particules reste dans le plan de propagation, et les ondes de Love, pour lesquelles le mouvement des particules est perpendiculaire au plan de propagation. Le mouvement des particules au passage de l'onde de Rayleigh suit une ellipse parcourue dans le sens trigonométrique (rétrograde); l'axe de l'ellipse est vertical; le rapport entre le grand axe et le petit axe dépend des paramètres d'élasticité du milieu, mais reste compris entre 1,4 et 1,9.

Une formation géologique comporte généralement au voisinage de sa surface, une couche de faible vitesse, appelée "zone altérée", dans laquelle se développent des ondes guidées (ondes dites pseudo-Rayleigh), formées par des interférences positives pour certaines fréquences entre les réflexions au mur et au toit de cette couche de faible vitesse. Ces ondes guidées sont aussi des ondes elliptiques qui se propagent dans le plan vertical contenant la source et le récepteur. Pour certaines de ces ondes le mouvement des particules est rétrograde comme dans le cas des ondes de Rayleigh proprement dites; pour d'autres, il est direct ou prograde, c'est-à-dire dans le sens des aiguilles d'une montre. Le rapport des axes principaux varie en raison de l'épaisseur de la zone altérée et du contraste des vitesses entre cette couche et le substratum. L'ensemble constitué par les ondes de Rayleigh et les différents modes d'ondes guidées dans la zone altérée est fortement dispersif : la vitesse apparente varie fortement avec la fréquence et peut couvrir une gamme importante. En conséquence, les ondes de surface peuvent recouvrir une grande partie des sismogrammes, occultant l'information utile en raison de leur forte énergie. Toutes ces ondes sont comprises dans le plan de propagation. Elles sont elliptiques, ce qui les distingue des ondes directes et réfléchies qui sont, en principe, polarisées linéairement. Leurs axes principaux sont proches de la verticale et de l'horizontale.

Comme les ondes de volume, les ondes de surface sont transitoires. La perturbation due à chacun des modes de pseudo-Rayleigh passe, avec sa vitesse propre, aux points de réception. En raison du principe de l'action et de la réaction, l'intégrale en temps de la perturbation est nulle - autrement dit, la perturbation enregistrée en un point est une ondelette d'aire nulle. En résumé, les ondes de surface de type Rayleigh sont :

- dominantes, ce qui permet de les localiser facilement si l'on dispose d'un critère de reconnaissance;

- elliptiques, contrairement aux ondes de volume, ce qui donne le critère de reconnaissance;

- transitoires, donc de durée limitée à une ou quelques oscillations sur une trace correspondant à un point de reception;

- dispersives, donc de contenu fréquentiel limité dans une fenêtre de temps.

Plus de détails sur les ondes de surface peuvent être trouvés par exemple dans les documents suivants :

- Tolstoy I., Usdin E., 1953,"Dispersive properties of stratified elastic and liquid media: a ray theory", Geophysics, V18, pp 844-870; ou
- Mooney H., Bolt B.,1966,"Dispersive characteristics of the first three Rayleigh modes for a single surface layer", Bull. Seism. Soc. Am., V56, pp 43-67.

Une méthode classique de filtrage consiste essentiellement à utiliser comme récepteurs sismiques, des "bretelles" de géophones interconnectés en série et à sommer leurs signaux respectifs. Pour être efficace, le dispositif de filtrage constitué par une ou plusieurs bretelles, doit couvrir, on le sait, une distance égale à la plus grande longueur d'onde des ondes de surface, ou, au moins, à la distance entre deux traces. Cela représente des dizaines de mètres de câbles, un encombrement et un poids important et un gros travail d'implantation et de maintenance. Ce type de filtrage, fondé sur la différence des vitesses horizontales apparentes entre les ondes de surface et les signaux réfléchis, n'est efficace que suivant la direction d'implantation. La réalisation d'un filtre de terrain isotrope, utilisable en 3D, est trop lourde pour être effectivement mise en pratique.

Une autre méthode connue pour filtrer les ondes de surface restant sur les sismogrammes après utilisation d'un filtre de terrain, consiste par exemple soit à couper tout ce qui est capté par les géophones en un point donné passé un certain délai et donc à partir l'arrivée des ondes de surface, (opération dit de "mute" interne), soit à éliminer toutes les fréquences en-dessous d'une certaine valeur par utilisation d'un filtre coupe-bas. Ces filtres reposent sur la décomposition des enregistrements en domaines disjoints et l'élimination des domaines où se rencontre le "bruit".

On connaît des méthodes de prospection sismiques comportant l'utilisation de récepteurs sismiques multi-axes et un traitement des signaux suivant au moins deux axes orthogonaux permettant une discrimination des ondes de surface.

Par le brevet US-A-4.458.341, par exemple, on connaît une méthode de prospection sismique comportant la réception des signaux sismiques émanant d'une formation, par des capteurs bi ou tri-axiaux, qui peuvent être associés à un ensemble de traitement adapté à détecter les ondes de Rayleigh. Les composantes radiale X et verticale V des signaux captés sont appliquées à des circuits de filtrage, de détection d'enveloppe et de comparaison de cet ensemble, qui permettent de déterminer une fenêtre de réception des ondes de Rayleigh d'après leurs caractéristiques spécifiques et de commander leur soustraction des signaux reçus.

Par le brevet US 4.935.905 également, on connaît une méthode de prospection sismique où l'on utilise des géophones bi ou tri-axiaux pour recevoir les ondes émanant d'une formation. Les différentes composantes des signaux captés sont exprimées en coordonnées polaires. Les composantes des ondes de Rayleigh sont obtenues à partir de ces composantes par application d'une méthode de moyenne et peuvent être soustraites.

Une méthode de filtrage des ondes de surface par des géophones multi-axes, est divulguée aussi dans "Expanded Abstracts, 57th EAEG conference, Glasgow, 1995, B12.

Par le brevet FR-A-2 648 567 également, on connaît une méthode de traitement numérique de signaux appliquée par exemple à l'analyse d'ondes cérébrales, où l'on utilise la technique d'analyse par ondelettes.

Filtrage mixte temps-fréquence :

Le filtrage en fréquence est une décomposition harmonique de la trace, suivi de l'élimination, dans le domaine de Fourier, des fréquences constitutives des ondes de surface (en général les fréquences les plus basses, jusqu'a 15 Hz, parfois plus) et de la reconstitution du signal à partir des domaines sauvegardés. Naturellement, l'élimination de ces domaines de temps ou de fréquence caractéristiques du bruit, entraîne également l'élimination de la part de signal utile appartenant à ces domaines. Pour limiter le recouvrement entre les domaines reconnus au bruit, que l'on cherche à éliminer, et le reste à sauvegarder, où l'on espère mettre en évidence le signal, il est connu de pratiquer des décompositions à deux dimensions temps-fréquence.

La méthode selon l'invention fait appel à la technique d'analyse de signal "temps-fréquence" dite "analyse par ondelettes" où un signal est analysé par une batterie d'ondelettes dont la taille varie en progression géométrique, chaque ondelette étant translatée au long de la trace avec un pas égal à une fraction de sa longueur. Cette technique est décrite par exemple par :

• Goupillaud P., Grossmann A., Morlet J., 1984/1985,"Cycle-octave and related transforms in seismic signal analysis", Geoexploration, V23, p.85-102.

Le signal d'analyse de la transformée en ondelettes peut être n'importe quel signal de moyenne nulle. On peut utiliser, par exemple, l'impulsion de Ricker

$$(a-t^2)e^{\frac{-t^2}{2a}}.$$

Dans la transformée en ondelettes, le signal est de forme constante. La décomposition temps-fréquence par la transformée en ondelettes, est une opération discrète (échantillonnée). A taille donnée, le signal est déplacé à un pas constant au plus égal à une période (cycle). On fait aussi varier sa taille; il est dilaté ou comprimé en modifiant son coefficient d'échelle E suivant une raison géométrique constante égale à 2 (au plus, soit un octave). L'échantillon au temps T et le coefficient d'échelle E de la transformée en ondelette est le produit de la trace par l'ondelette de coefficient d'échelle E, centrée au temps T.

Si h(t) est la base de l'ondelette, l'ondelette de coefficient d'échelle a, translatée de b, sera

$$h_{a,b}(t) = \frac{1}{\sqrt{a}}h(\frac{t-b}{a})$$

où a est le coefficient ou paramètre d'échelle et b le paramètre de translation en temps. La transformée en ondelettes d'un signal s(t) s'écrit :

$$T_s(b,a) = \frac{1}{\sqrt{a}}\int_{-\infty}^{\infty}s(t)h(\frac{t-b}{a})dt$$

La transformée inverse est, à un coefficient près, la somme des produits de chaque terme de la transformée en ondelettes par l'ondelette correspondante.

$$s(t) = \frac{1}{\sqrt{c_g}}\int_{-\infty}^{\infty}T_s(b,a)h\left(\frac{t-b}{a}\right)\frac{dadb}{a^2}\text{ avec }cg = \int\frac{\left|\int e^{-i\omega t}h(t)dt\right|^2}{|\omega|}d\omega$$

La méthode selon l'invention permet de discriminer des ondes elliptiques se propageant suivant au moins un plan de propagation, parmi d'autres ondes se propageant dans un milieu matériel (tel que par exemple une formation géologique). Elle comprend la détection par au moins un récepteur (constitué par exemple d'un ou plusieurs détecteurs directionnels tels que des géophones ou accéléromètres couplés avec ladite formation) des composantes des ondes suivant au moins deux directions orthogonales, choisies en relation avec le plan de propagation des ondes élliptiques à filtrer.

Elle est caractérisée en ce qu'elle comporte la détermination des transformées en ondelettes des signaux produits par ce récepteur en réponse aux ondes reçues, le choix d'une fenêtre de sélection encadrant les valeurs d'ellipticité des ondes elliptiques à filtrer, et une sélection des amplitudes des transformées en ondelettes suivant un critère basé sur le rapport de leurs amplitudes respectives.

Suivant un mode de mise en oeuvre, on opère une transformée en ondelettes des signaux reçus suivant au moins deux directions orthogonales pour obtenir une série d'échantillons successifs $(TO_n(Z), TO_n(X))$ correspondant à une succession de facteurs d'échelle (f) et d'instants (T) d'une ondelette d'analyse choisie, on détermine les rapports :

$$r_1 = TO_n(Z)/TO_{(n-1)}(X) \ ;$$

et

$$r_2 = -TO_n(Z)/TO_{(n+1)}(X).$$

où (n-1, n, n+1) représentent des numéros d'ordre successifs, on valide des échantillons pour lesquels les valeurs $r_1$ et $r_2$ de ces rapports sont compris dans la fenêtre de sélection, et on reconstruit le champ des ondes elliptiques en opérant une transformée en ondelettes inverse. On on peut ensuite éventuellement soustraire le champ d'ondes elliptiques reconstruit des signaux reçus.

La méthode de discrimination peut être utilisée par exemple pour le filtrage d'ondes elliptiques se propageant dans une formation géologique en installant un ou plusieurs récepteurs multi-axes (géophones, accéléromètres) au voisinage de la surface du sol ou dans des puits pour filtrer des ondes de surface ou des ondes se propageant le long des puits, dites ondes de tube.

Cette méthode de discrimination peut être incluse dans une méthode de prospection sismique d'une formation souterraine où l'on applique des ondes acoustiques ou sismiques à la formation, on reçoit des ondes renvoyées par des discontinuités dans la formation au moyen d'un ou plusieurs récepteurs adaptés à détecter chacun les composantes des ondes reçues suivant au moins deux directions orthogonales, on enregistre des signaux captés, et on traite les signaux enregistrés pour l'élimination des ondes elliptiques par une détermination des transformées en ondelettes des signaux produits par chaque récepteur en réponse aux ondes et une sélection des amplitudes des signaux résultant de cette transformation en ondelettes suivant un critère basé sur le rapport de leurs amplitudes respectives.

Suivant un mode de mise en oeuvre de cette méthode de prospection sismique, on traite les signaux enregistrés en choisissant une fenêtre de sélection encadrant les valeurs d'ellipticité des ondes elliptiques à filtrer, en opérant une transformée en ondelettes des signaux reçus suivant au moins deux directions orthogonales pour obtenir une série d'échantillons successifs TO(X), TO(Z) correspondant à une succession de facteurs d'échelle (f) et d'instants (T) d'une ondelette d'analyse choisie, en déterminant de même les rapports :

$$r_1 = TO_n(Z)/O_{(n-1)}(X) ;$$

et

$$r_2 = -TO_n(Z)/TO_{(n+1)}(X).$$

où (n-1, n, n+1) représentent des numéros d'ordre successifs, en validant des échantillons pour lesquels les valeurs $r_1$ et $r_2$ desdits rapports sont compris dans la fenêtre de sélection et en reconstruisant le champ des ondes elliptiques en opérant une transformée en ondelettes inverse. On peut ensuite éventuellement éliminer par soustraction le champ d'ondes elliptiques reconstruit des signaux reçus.

La méthode de filtrage d'ondes elliptiques selon l'invention opère un filtrage énergique des ondes de surface en utilisant seulement, à chaque emplacement sur le terrain, un récepteur unique à deux composantes et une décomposition des traces sismiques en pavés temps-échelle. Cette méthode ouvre la voie au remplacement du lourd dispositif de réception de terrain utilisé habituellement, avec une ou plusieurs bretelles de géophones par trace, par des récepteurs 3 composantes uniques à chaque point de réception choisi.

La qualité du filtrage obtenu par la méthode proposée, sur les signaux produits par des récepteurs triaxiaux sur le terrain, est meilleure que celle obtenue classiquement par sommation des enregistrements de bretelles de géophones étalés sur des longueurs importantes. Elle prend en compte l'ellipticité réelle des ondes elliptiques, qui est très variable dans la réalité, sans faire aucune hypothèse simplificatrice sur la nature de leur polarisation. Le filtrage d'ondes elliptiques permet l'atténuation des ondes de surface de vitesse rapide. L'enregistrement sur un récepteur unique multicomposantes évite en outre l'atténuation des hautes fréquences due à la sommation d'enregistrements espacés.

D'autres caractéristiques et avantages de la méthode selon l'invention, apparaîtront à la lecture de la description ci-après de modes de réalisation décrits à titre d'exemples non limitatifs, dans une application particulière à la géophysique, en se référant aux dessins annexés où :

- la Fig. 1 montre un schématiquement un mode de réalisation du dispositif de mise en oeuvre de la méthode placé sur le terrain au voisinage du lieu d'implantation d'un récepteur;

- la Fig.2 montre schématiquement un autre mode pratique de réalisation où le dispositif de mise en oeuvre de la méthode est inclus dans un boîtier d'acquisition et de pré-traitement des signaux reçus;

- les Fig.3a, 3b, 3c montrent respectivement un sismogramme original, un autre représentant les ondes elliptiques et un troisième obtenu en faisant la différence des deux précédents;

- les Fig.4a, 4b, 4c, 4d montrent des sismogrammes d'une composante Z filtrée en ellipticité avec des fenêtres d'ellipticité disjointes, respectivement (-2,2, -0,8), (-0,8, 0), (0, 0,8) et (0,8, 2,2);

- la Fig.5a, 5b, 5c montrent respectivement un sismogramme obtenu avec une bretelle de 9 géophones réalisant un filtre de terrain, un autre obtenu avec un récepteur unique tri-axes et un troisième, le résultat du filtrage d'ondes elliptiques selon l'invention; et

- les Fig.6a, 6b, 6c, 6d montrent respectivement .les sismogrammes d'une composante Z brute (6a), filtrée en ellipticité (6b), après application d'un filtre temps-fréquence en ondelettes (6c), et après filtrage de l'onde aérienne.

La méthode selon l'invention exploite la technique de transformée en ondelettes rappelée ci-dessus et connue en soi pour détecter et discriminer les ondes elliptiques.

Ayant déterminé à cet effet les transformées en ondelettes TO(X) et TO(Z) des composantes X et Z, échantillonnées au quart de période (ou quart de cycle), on peut tester la présence éventuelle d'une onde elliptique en calculant le rapport r du nième échantillon de la transformée de Z sur le (n-1)ième échantillon de X : $r=TO_n(Z)/TO_{(n-1)}(X)$ de mëme que le rapport $-TO_n(Z)/TO_{(n+1)}(X)$, et ceci tant que dure le passage de l'onde elliptique (qui, rappelons-le, est dominante). On vérifie en effet que ce rapport r est égal a ellipticité a/b de cette onde elliptique.

Par ce moyen, il est possible de détecter la présence d'ondes elliptiques dont l'ellipticité est comprise dans une fenêtre donnée f, en sélectionnant les transformées en ondelettes pour lesquelles la valeur du rapport r est contenu dans cette même fenêtre f.

La reconstruction des signaux sismiques débarrassés des ondes de surface, peut alors être effectuée en écartant les pavés temps-échelle pour lesquels les rapports :

$$r=TO_n(Z)/TO_{(n-1)}(X)$$

ou

$$r= -TO_n(Z)/TO_{(n+1)}(X)$$

sont compris dans la fenêtre f. Les pavés temps-échelle pour lesquels les rapports r sont dans la fenêtre déterminée, permettent d'estimer la contribution des ondes de surface. Cette contribution peut alors être retranchée des sismogrammes initiaux.

Construction du filtre :

Le filtrage des ondes elliptiques est conduit comme suit :

1) prendre la transformée en ondelettes des composantes X et Z d'un enregistrement à deux ou trois composantes;

2) choisir une fenêtre de sélection, définissant les valeurs d'ellipticité des ondes à filtrer;

3) pour chaque voie, (c'est-à-dire pour chaque valeur du coefficient d'échelle de l'ondelette d'analyse) et pour chaque échantillon en temps, (c'est-à-dire pour chaque translation de cette même ondelette), calculer les rapports :

$$r_1 = TO_n(Z)/TO_{(n-1)}(X) ;$$

et

$$r_2 = -TO_n(Z)/TO_{(n+1)}(X).$$

4) sélectionner les échantillons en validant

a) les échantillons $TO(Z)_n$ et $TO_n-1(X)_{(n-1)}$ pour lesquels $r_1$ est dans la fenêtre de sélection, et

b) les échantillons $TO_n(Z)$ et $TO_{(n-1)}(X)$ pour lesquels $r_2$ est dans la fenêtre de sélection;

et, en mettant à zéro les échantillons non valides,

5) procéder à la reconstruction du champ d'ondes elliptiques par transformée en ondelettes inverse.

Pour obtenir des sismogrammes débarrassés des ondes elliptiques, il suffit de soustraire le champ d'ondes elliptiques obtenus des sismogrammes d'origine.

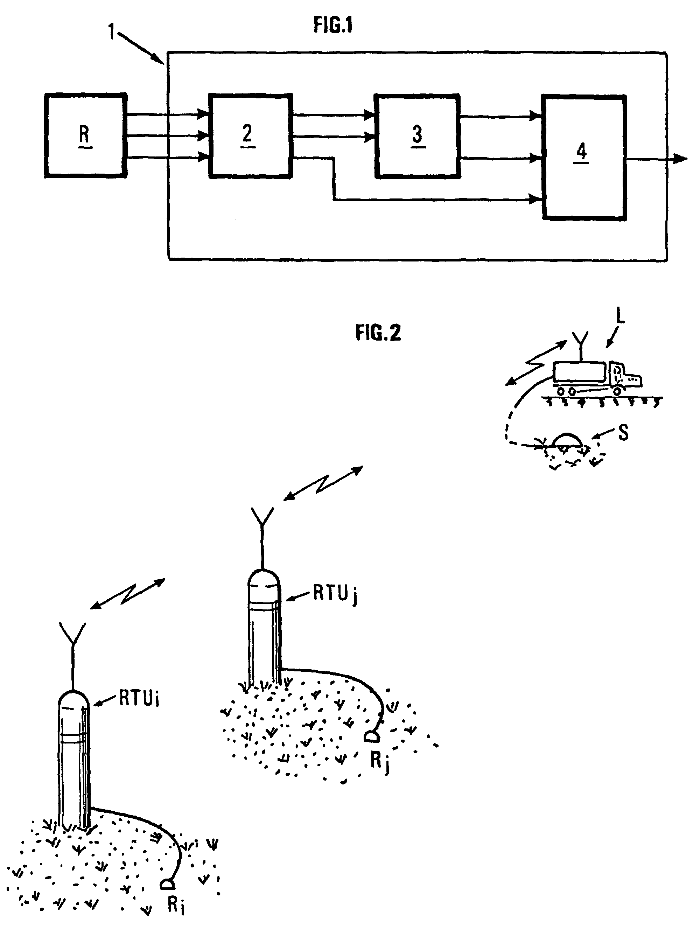

Le dispositif de mise en oeuvre de la méthode est associé en combinaison avec au moins un récepteur d'ondes acoustiques ou sismiques multi-composantes R (Fig.1, 2). Ce récepteur R comprend au moins deux capteurs dont les axes sont orientés suivant deux directions orthogonales choisies de préférence en relation avec un plan de polarisation des ondes elliptiques à déceler. En prospection sismique par exemple, on utilise typiquement un récepteur tri-axes dont l'un des axes est placé dans le plan contenant la source sismique et l'emplacement de couplage du récepteur. Le dispositif comporte un ensemble de traitement 1 comprenant un convertisseur analogique-numérique 2 pour l'échantillonnage et la numérisation des différents signaux produits par le récepteur R. Pour tenir compte d'un écart d'azimut éventuel du plan contenant l'axe du capteur vertical et celui d'un des capteurs horizontaux par rapport au plan vertical de référence contenant l'emplacement de la source sismique utilisée et l'emplacement du récepteur R, l'ensemble de traitement 1 comprend un élément de calcul 3 des coordonnées X, Z dans ce même plan de référence, et un processeur de filtrage pour réaliser la discrimination des ondes elliptiques parmi les ondes reçues et leur élimination éventuelle, suivant l'algorithme défini ci-dessus. Dans la pratique, on utilise de préférence un calculateur 4 programmé pour réaliser notamment les étapes de l'algorithme de discrimination.

Pour réaliser toutes les fonctions d'acquisition et de traitement des signaux produits par chaque récepteur R, selon la méthode, on peut utiliser avantageusement une unité locale d'acquisition RTU (Fig.2) telle que celles décrites dans les demandes de brevet français EN 94/06514 et 2.692.384 du demandeur. Chaque unité locale RTUi, RTUj (Fig. 2) est placée au voisinage et connectée à au moins un récepteur sismique de terrain Ri, Rj. Outre un processeur de gestion, chacune de ces unités locales RTU comporte un processeur complémentaire de calcul (de type DSP) programmé pour effectuer en temps réel des fonctions étendues: traitements sur les données avant leur transmission tels que combinaisons diverses de signaux sismiques, compression de données, contrôles de qualité effectués en temps réel durant la phase de déploiement de l'équipement sismique (récepteurs sismiques et appareillage électronique etc.) Chaque unité locale RTU acquiert et pré-traite les données sismiques reçues de la formation en réponse à des ondes sismiques transmises dans le sol par une source sismique S, avant de les transmettre à un laboratoire central de commande et d'enregistrement L par des câbles ou des voies hertziennes.

Des programmes de traitement supplémentaires, propres à la mise en oeuvre de la méthode selon l'invention, peuvent dans ce cas être inclus dans de telles unités de terrain que l'on relie en l'occurrence à au moins un récepteur multi-axes R.

L'ensemble de traitement peut comporter également un filtre passe-haut intercalé (non représenté).

Il est également possible d'enregistrer au moins deux des trois composantes de chaque récepteur et d'effectuer le filtrage postérieurement à l'acquisition sur le terrain, que ce soit dans le laboratoire central de terrain ou dans un centre de calcul.

Validation expérimentale :

Des enregistrements sismiques ont été effectués avec un équipement sismique comportant :

- alternativement une bretelle de géophones classique à 9 géophones interconnectés ou un récepteur sismique unique tri-axes à 3C.

- une source sismique à chute de poids; et

- un ensemble d'acquisition et d'enregistrement des signaux au pas de 2 millisecondes.

Exemples d'application du filtrage d'ondes elliptiques :

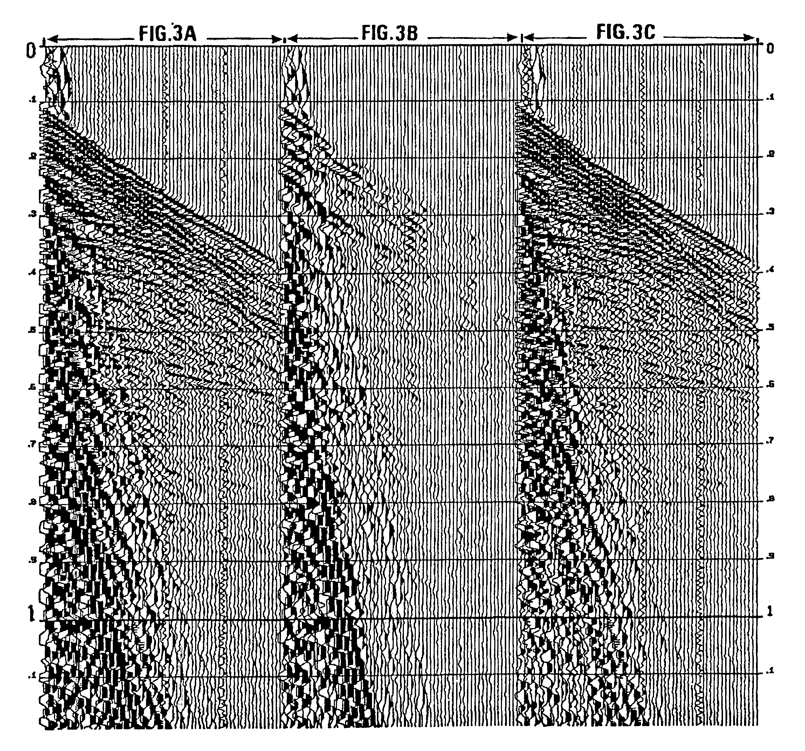

Les Fig.3-7 montrent les résultats de la reconstruction par transformation inverse de la transformée en ondelettes du sismogramme en application de la méthode selon l'invention. La transformée est échantillonnée au quart de période en temps. L'échantillonnage au demi-octave en échelle donne une reconstruction satisfaisante pour un quart de cycle de base de 24 ms et une compression du signal d'analyse sur 2,5 octaves. Pour une bonne reconstruction, il est préférable que le pas d'échantillonnage soit au plus égal au huitième de période du signal le plus étroit.

Estimation des ondes elliptiques :

La bande de fréquence dans laquelle se trouvent les ondes de surface est plus limitée que celle du signal utile. On peut donc estimer ces ondes sur un nombre limite d'octaves et soustraire l'estimation des ondes elliptiques du sismogramme initial.

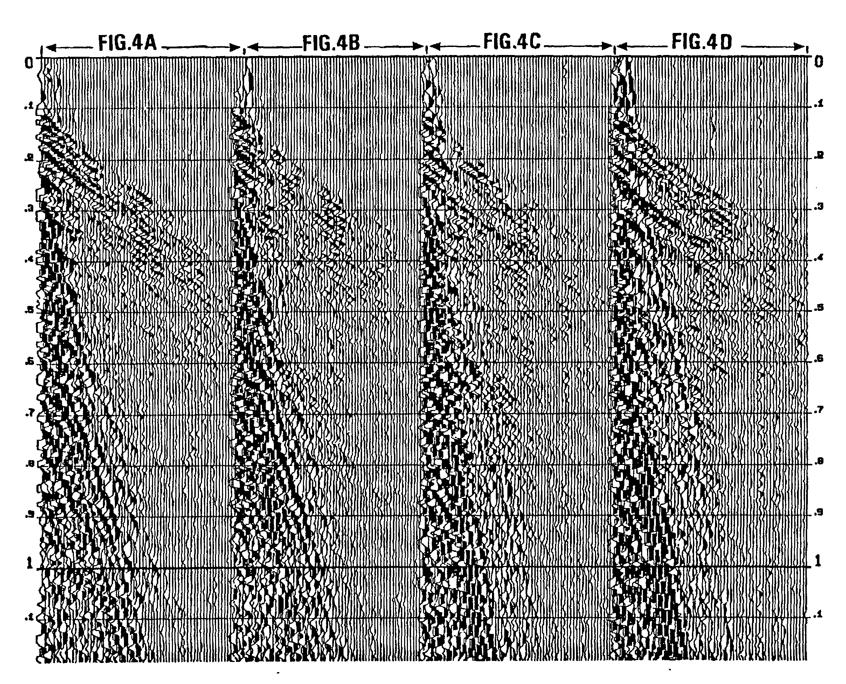

De même qu'on réalise une analyse en fréquence par juxtaposition de filtres dans des bandes de fréquence différentes, on peut réaliser une analyse d'ellipticité en filtrant un sismogramme avec des fenêtres d'ellipticité disjointes. L'analyse montre (Fig.4a à 4d), que les arrivées à 570 m/s ont une "ellipticité" comprise, pour l'essentiel, entre (-0.8 et 2,2). Les valeurs négatives signifient que ces ondes elliptiques entraînent un mouvement des particules dans le sens des aiguilles d'une montre ou prograde. Ce sont des ondes M2 ou ondes dites de Sesawa. Les ellipses décrites ont leur axe majeur sur l'horizontale. Ces filtres disjoints permettent d'analyser des caractères d'ellipticité des différentes ondes enregistrées et de préciser leur nature.

Comparaison avec un filtre terrain :

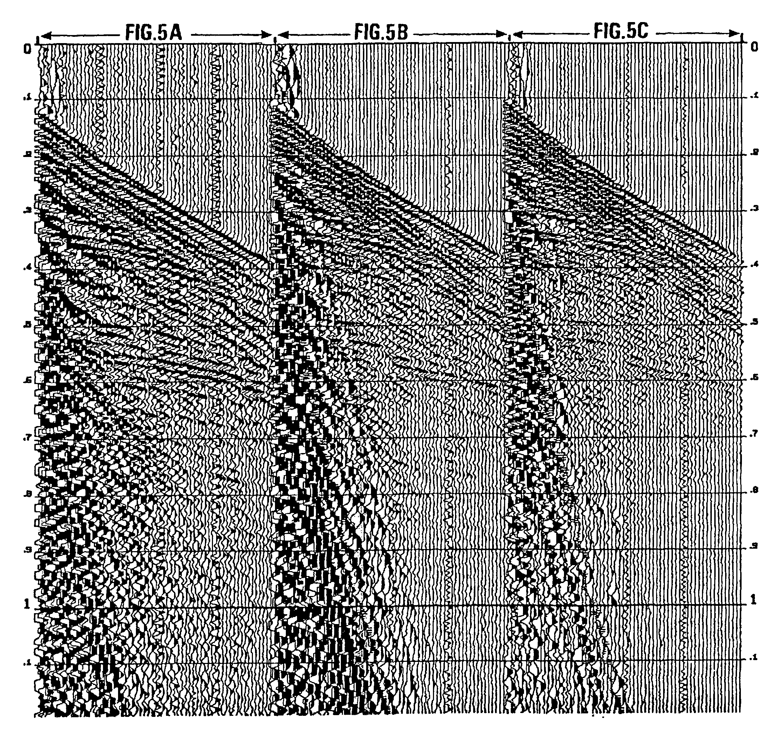

Sur les Fig.5a à 5c où sont juxtaposés les enregistrements effectués avec une bretelle de géophones, la composante Z du capteur 3-C unique et le signal issu du filtre d'ondes elliptiques, on voit par exemple que les ondes pseudo-Rayleigh à 570 m/s ne sont pas filtrées par la bretelle de géophones, qui est trop courte. C'est aussi vrai pour les ondes de surface à 2200 m/s. Le filtre d'ondes elliptiques est plus efficace dans ces domaines. Par ailleurs, le contenu fréquentiel du champ réfléchi apparait nettement plus large sur le sismogramme filtre provenant du capteur unique 3C. Sur le sismogramme filtré 5c, il reste une onde de faible vitesse dont la polarisation est pratiquement linéaire.

Cette onde présente une pseudo-période bien constante et peut être facilement enlevée par un filtre temps-fréquence en ondelettes.

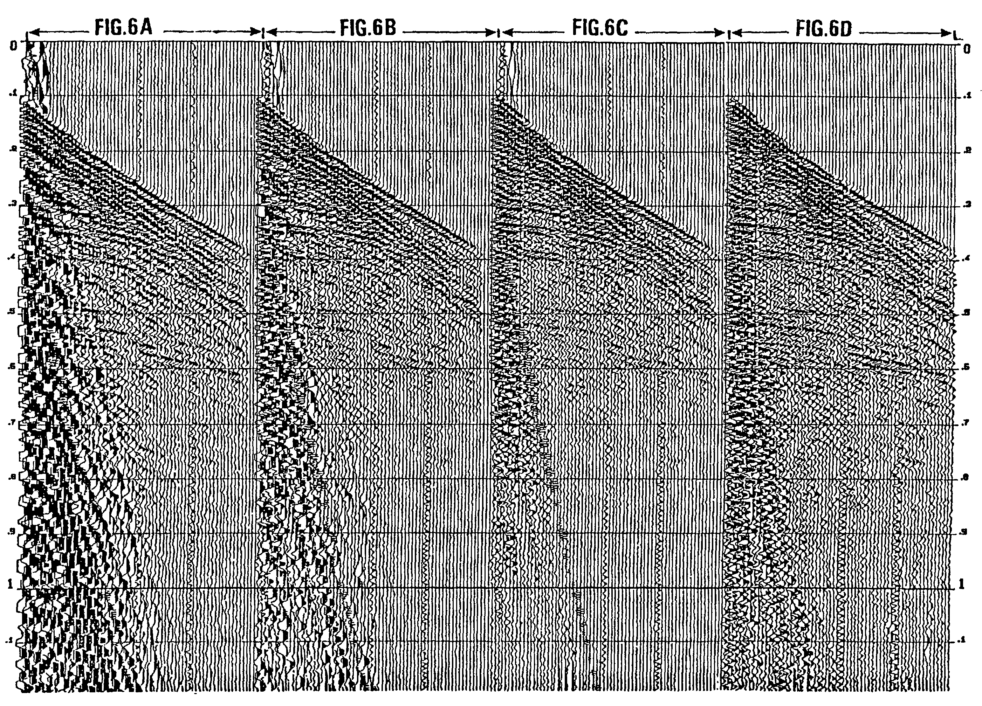

L'onde aérienne, représentée par l'événement à haute fréquence visible sur les Fig 6a à 6c, donne la mesure de l'atténuation réalisée par le filtre d'ondes elliptiques utilisé. Sur la Fig.6d, cette onde aérienne a été filtrée par un filtre en fréquence passe-bas.

Il apparaît donc, comme le confirment les exemples ci-dessus, que les ondes de surface elliptiques, ondes de Rayleigh et pseudo-Rayleigh peuvent être filtrées par un filtre d'ondes elliptiques, si l'on dispose d'enregistrements dans la direction source-récepteur et sur la verticale.

Les résultats de la méthode de filtrage en ondelettes proposée sur les signaux produits par des récepteurs triaxiaux 3 sur le terrain, sont meilleurs que ceux obtenus classiquement par sommation des enregistrements de 9 géophones étalés sur 20 mètres. Le filtre d'ondes elliptiques permet l'atténuation des ondes de surface de vitesse rapide et l'enregistrement sur un capteur unique permet d'éviter l'atténuation des hautes fréquences dues à la sommation d'enregistrements espacés.

Dans le cadre d'applications à la géophysique, la méthode selon l'invention peut être utilisée par exemple pour discriminer les ondes à caractère elliptique par rapport à d'autres ondes que ce soit par exemple des ondes à polarisation rectiligne ou bien même d'autres ondes elliptiques, de façon à les discriminer les unes par rapport aux autres. De telles ondes elliptiques peuvent être des ondes de surface ou encore des ondes de tube.

On a décrit des modes de mise en oeuvre appliqués dans le cadre d'un traitement de données géophysiques. Il est bien évident cependant que la méthode de discrimination et de filtrage des ondes elliptiques selon l'invention peut être utilisée dans d'autres domaines d'application et sur d'autres types d'onde que les ondes acoustiques ou sismiques, notamment sur des signaux électriques, électro-physiologiques, etc.

**Revendications**

1. Méthode pour discriminer des ondes elliptiques se propageant suivant au moins un plan de propagation, dans un milieu matériel, comprenant la détection par au moins un récepteur (R), des composantes des ondes suivant au moins deux directions orthogonales choisies en relation avec le plan de propagation des ondes elliptiques à filtrer, **caractérisée en ce qu'**elle comporte la détermination des transformées en ondelettes des signaux produits par ce récepteur en réponse aux ondes reçues, le choix d'une fenêtre de sélection encadrant les valeurs d'ellipticité des ondes elliptiques à filtrer et une sélection des amplitudes de ces transformées en ondelettes suivant un critère basé sur le rapport de leurs amplitudes respectives.

2. Méthode de discrimination selon la revendication 1, **caractérisée en ce que** :

   - on opère une transformée en ondelettes des signaux reçus suivant au moins deux directions orthogonales (Z, X) pour obtenir une série d'échantillons successifs ($TOn(Z)$, $TOn(X)$) correspondant à une succession de facteurs d'échelle (f) et d'instants (T) d'une ondelette d'analyse choisie,

   - on détermine les rapports :

$$r1 = TOn(Z)/TOn\text{-}1(X),$$

   et

$$r2 = -TOn(Z)/TOn\text{+}1(X),$$

   où (n-1, n, n+1) représentent des numéros d'ordre successifs,

- on valide des échantillons pour lesquels les valeurs r1 et r2 desdits rapports sont compris dans la fenêtre de sélection; et

- on reconstruit le champ d'ondes elliptiques en opérant une transformée en ondelettes inverse.

**3.** Méthode de discrimination selon la revendication 1 ou 2, **caractérisée en ce qu'**on soustrait le champ d'ondes elliptiques reconstruit des signaux reçus.

**4.** Méthode de discrimination selon l'une des revendications précédentes, **caractérisée en ce que** ledit milieu est une formation géologique.

**5.** Méthode selon la revendication 4, **caractérisée en ce que** chaque récepteur comporte plusieurs détecteurs directionnels constitués de géophones ou accéléromètres couplés avec ladite formation.

**6.** Méthode selon la revendication précédente, caractérisée en ce quelle comporte l'installation d'au moins un récepteur au voisinage de la surface du sol pour le filtrage des ondes elliptiques de surface.

**7.** Méthode selon la revendication précédente, caractérisée en ce quelle comporte l'installation d'au moins un récepteur dans au moins un puits au travers de cette formation pour le filtrage des ondes elliptiques se propageant le long de ce puits.

**8.** Méthode selon la revendication 1, **caractérisée en ce que** les ondes elliptiques à discriminer sont des ondes acoustiques ou sismiques de surface se propageant dans une formation souterraine

**9.** Méthode de prospection sismique selon la revendication 8, **caractérisée en ce que** l'on traite les signaux enregistrés en choisissant une fenêtre de sélection encadrant les valeurs d'ellipticité des ondes elliptiques à filtrer, en opérant une transformée en ondelettes des signaux reçus suivant au moins deux directions orthogonales (Z, X) pour obtenir une série d'échantillons successifs (TOn(Z), TOn(X)) correspondant à une succession de facteurs d'échelle (f) et d'instants (T) d'une ondelette d'analyse choisie, en déterminant les rapports :

$$r1 = TOn(Z)/TOn\text{-}1(X) \; ;$$

et

$$r2 = \text{-}TOn(Z)/TOn\text{+}1(X).$$

où (n-1, n, n+1) représentent des numéros d'ordre successifs, en validant des échantillons pour lesquels les valeurs $r_1$ et $r_2$ desdits rapports sont compris dans la fenêtre de sélection, et en reconstruisant le champ d'ondes elliptiques par une transformée en ondelettes inverse.

**10.** Méthode de prospection sismique selon la revendication 8 ou 9, **caractérisée en ce que** l'on soustrait le champ d'ondes elliptiques reconstruit, des signaux reçus.

**Patentansprüche**

**1.** Verfahren zum Diskriminieren der elliptischen sich in wenigstens einer Fortpflanzungsebene fortpflanzenden Wellen, in einem stofflichen Medium, das die Erfassung durch wenigstens einem Empfänger (R) der Komponenten der Wellen gemäß wenigstens zweier orthogonaler Richtungen umfasst, die in bezug auf die Fortpflanzungsebene der elliptischen zu filtrierenden Wellen gewählt sind, **dadurch gekennzeichnet, dass** es die Bestimmung der Wellentransformierten der durch diesen Empfänger in Abhängigkeit von den empfangenen Wellen erzeugten Signale die Wahl eines Selektionsfensters umfasst, das die Elliptizitätswerte der zu filtrierenden elliptischen Wellen umrahmt und eine Selektion der Amplituden dieser Wellentransformierten entsprechend einem Kriterium umfasst, das auf dem Verhältnis ihrer jeweiligen Amplituden beruht.

**2.** Diskriminierungsverfahren nach Anspruch 1, **dadurch gekennzeichnet, dass** man in kleine Wellen Signale transformiert, die gemäß wenigstens zweier orthogonaler Richtungen (Z, X) empfangen wurden, um eine Reihe aufeinander folgender Proben (TOn(Z), TOn(X)) entsprechend einer Aufeinanderfolge von Maßstabsfaktoren (f) und IST-Faktoren (T) einer gewählten Analysewelle zu erhalten,

    a. man die Verhältnisse bestimmt

$$r1 = TOn(Z)/TOn-1(X)$$

    und

$$r2 = -TOn(Z)/TOn+1(X),$$

    wo (n-1, n, n+1) aufeinanderfolgende Ordnungszahlen darstellen ;

    b. man Proben validiert, für die die Werte r1 und r2 dieser Verhältnisse im Selektionsfenster sich befinden und

    c. man das Feld aus elliptischen Wellen rekonstruiert, indem man in Wellen invers transformiert.

**3.** Diskrirninierungsverfahren nach Anspruch 1 oder 2, **dadurch gekennzeichnet, dass** man das rekonstruierte Feld elliptischer Wellen von den empfangenen Signalen abzieht.

**4.** Diskriminierungsverfahren nach einem der vorhergehenden Ansprüche, **dadurch gekennzeichnet, dass** dieses Medium eine geologische Formation ist.

**5.** Verfahren nach Anspruch 4, **dadurch gekennzeichnet, dass** jeder Empfänger mehrere Richtdetektoren umfasst, die aus Geophonen oder mit dieser Formation gekoppelten Beschleunigungsmessern gebildet sind.

**6.** Verfahren nach dem vorhergehenden Anspruch, **dadurch gekennzeichnet, dass** es die Installation wenigstens eines Empfängers benachbart der Erdoberfläche zur Filterung der elliptischen Oberflächenwellen umfasst.

**7.** Verfahren nach dem vorhergehenden Anspruch, **dadurch gekennzeichnet, dass** es die Installation wenigstens eines Empfängers in wenigstens einem diese Formation durchsetzenden Bohrloch zur Filtrierung der elliptischen Wellen umfasst, die sich längs dieses Bohrlochs fortpflanzen.

**8.** Verfahren nach Anspruch 1, **dadurch gekennzeichnet, dass** die elliptischen zu diskriminierenden Wellen akustische oder seismische Oberflächenwellen sind, die sich in einer unterirdischen Formation fortpflanzen.

**9.** Verfahren zur seismischen Prospektion gemäß Anspruch 8, **dadurch gekennzeichnet, dass** man die aufgezeichneten Signale verarbeitet, indem man ein Selektionsfenster wählt, das die Elliptizitätswerte der zu filtrierenden elliptischen Wellen umrahmt, indem man Signale in kleine Wellen transformiert, die gemäß wenigstens zweier orthogonaler Richtungen (Z, X) empfangen wurden, um eine Reihe aufeinanderfolgender Proben (TOn(Z), TOn(X)) entsprechend einer Aufeinanderfolge von Maßstabsfaktoren (f) und IST-Faktoren (T) einer gewählten Analysewelle zu erhalten, indem man die nachstehenden Verhältnisse bestimmt

$$r1 = TOn(Z)/TOn-1(X)$$

    und

$$r2 = -TOn(Z)/TOn+1(X),$$

    wo (n-1, n, n+1) aufeinanderfolgende Ordnungszahlen darstellen, indem man Proben validiert, für die die Werte $r_1$ und $r_2$ dieser Verhältnisse im Selektionsfenster sich befinden und indem man das Feld elliptischer Wellen durch eine inverse Wellentransfonnierte rekonstruiert.

**10.** Verfahren zur seismischen Prospektion gemäß Anspruch 8 oder 9, **dadurch gekennzeichnet, dass** man das rekonstruierte Feld der elliptischen Wellen von den empfangenen Signalen abzieht.

**Claims**

**1.** Method for discriminating elliptical waves propagating in at least one plane of propagation in a material medium, comprising detection by at least one receiver (R) of the components of the waves in at least two orthogonal directions chosen in relation to the plane of propagation of the elliptical waves to be filtered, **characterised in that** it comprises determination of the wavelet transforms of the signals produced by this receiver in response to the waves received, choice of a selection window framing the ellipticity values of the elliptical waves to be filtered, and selection of the amplitudes of these wavelet transforms according to a criterion based on the ratio of their respective amplitudes.

**2.** Method of discrimination according to claim 1, **characterised in that**:

- a wavelet transform is performed on the signals received in at least two orthogonal directions (Z, X) in order to obtain a series of successive samples (TOn(Z), Ton(X)) corresponding to a succession of scale factors (f) and instants (T) of a chosen analysis wavelet,
- the ratios:

$$r1 = TOn(Z)/TOn\text{-}1(X),$$

and

$$r2 = \text{-}TOn(Z)/TOn\text{+}1(X)$$

are determined in which (n-1, n, n+1) represent successive serial numbers,
- samples for which the values r1 and r2 of said ratios lie within the selection window are validated, and
- the field of elliptical waves is reconstructed by performing an inverse wavelet transform.

**3.** Method of discrimination according to claim 1 or 2, **characterised in that** the reconstructed field of elliptical waves is subtracted from the signals received.

**4.** Method of discrimination according to one of the preceding claims, **characterised in that** said medium is a geological formation.

**5.** Method according to claim 4, **characterised in that** each receiver comprises a plurality of directional detectors constituted by geophones or accelerometers coupled to said formation.

**6.** Method according to the preceding claim, **characterised in that** it comprises installation of at least one receiver in the vicinity of the surface of the ground to filter the surface elliptical waves.

**7.** Method according to the preceding claim, **characterised in that** it comprises installation of at least one receiver in at least one well through this formation to filter the elliptical waves propagating along this well.

**8.** Method according to claim 1, **characterised in that** the elliptical waves to be discriminated are acoustic or seismic surface waves propagating in a subterranean formation.

**9.** Method of seismic prospecting according to claim 8, **characterised in that** the recorded signals are processed by choosing a selection window framing the ellipticity values of the elliptical waves to be filtered, by performing a wavelet transform on the signals received in at least two orthogonal directions (Z, X) in order to obtain a series of successive samples (TOn(Z), TOn(X)) corresponding to a succession of scale factors (f) and instants (T) of a chosen analysis wavelet, by determining the ratios:

$$r1 = TOn(Z)/TOn-1(X),$$

and

$$r2 = -TOn(Z)/TOn+1(X)$$

in which (n-1, n, n+1) represent successive serial numbers, by validating samples for which the values $r_1$ and $r_2$ of said ratios lie within the selection window, and by reconstructing the field of elliptical waves by an inverse wavelet transform.

10. Method of seismic prospecting according to claim 8 or 9, **characterised in that** the reconstructed field of elliptical waves is subtracted from the signals received.

**FIG.1**

**FIG.2**

FIG.3A FIG.3B FIG.3C

FIG.4A — FIG.4B — FIG.4C — FIG.4D

FIG.5A  FIG.5B  FIG.5C

FIG.6A — FIG.6B — FIG.6C — FIG.6D